# EUROPÄISCHE PATENTSCHRIFT

(11) **EP 3 335 059 B1**
(45) Veröffentlichungstag und Bekanntmachung des Hinweises auf die Patenterteilung: **17.07.2024**
(21) Anmeldenummer: 16753334.8
(22) Anmeldetag: 11.08.2016
(51) Int. Cl.: G01S 15/931, G01S 7/521

(54) **ULTRASCHALLSENSORVORRICHTUNG FÜR EIN KRAFTFAHRZEUG MIT ZWEITEILIGER BEFESTIGUNGSVORRICHTUNG, VERKLEIDUNGSANORDNUNG, KRAFTFAHRZEUG SOWIE VERFAHREN**
ULTRASONIC SENSOR DEVICE FOR A MOTOR VEHICLE, COMPRISING A TWO-PART FASTENING DEVICE, TRIM ARRANGEMENT, MOTOR VEHICLE AND METHOD
DISPOSITIF DE DÉTECTION PAR ULTRASONS POUR VÉHICULE AUTOMOBILE, POURVU D'UN DISPOSITIF DE FIXATION EN DEUX PIÈCES, ENSEMBLE D'HABILLAGE, VÉHICULE AUTOMOBILE ET PROCÉDÉ

(30) Priorität: 11.08.2015 DE 102015113192
(43) Veröffentlichungstag der Anmeldung: 20.06.2018
(73) Patentinhaber: Valeo Schalter und Sensoren GmbH, 74321 Bietigheim-Bissingen (DE)
(72) Erfinder: KUPFERNAGEL, Uwe, 74321 Bietigheim-Bissingen (DE); EIDEL, Oliver, 74321 Bietigheim-Bissingen (DE)
(74) Vertreter: Enge, Sebastian
(86) Internationale Anmeldenummer: PCT/EP2016/069128
(87) Internationale Veröffentlichungsnummer: WO 2017/025596

(56) Entgegenhaltungen:
- EP-A1- 1 577 169
- WO-A1-2017/005448
- WO-A2-2014/016298
- DE-A1- 102006 007 710
- DE-A1- 102010 034 260
- DE-A1- 102010 034 491
- DE-A1- 102010 049 818

## Beschreibung

Die vorliegende Erfindung betrifft eine Ultraschallsensorvorrichtung für ein Kraftfahrzeug mit einem Ultraschallsensor, welcher eine Membran zum Aussenden und/oder Empfangen eines Ultraschallsignals aufweist, und mit einer Befestigungsvorrichtung, welche dazu ausgelegt ist, in einer bestimmungsgemäßen Einbaulage der Ultraschallsensorvorrichtung an einem Außenverkleidungsteil des Kraftfahrzeugs die Membran mit einer Vorspannkraft an eine Innenseite des Außenverkleidungsteils zu drücken. Die Erfindung betrifft außerdem eine Verkleidungsanordnung mit einer Ultraschallsensorvorrichtung und einem Außenverkleidungsteil. Darüber hinaus betrifft die vorliegende Erfindung ein Kraftfahrzeug mit einer solchen Verkleidungsanordnung. Schließlich betrifft die vorliegende Erfindung ein Verfahren zum Montieren einer Ultraschallsensorvorrichtung an einem Außenverkleidungsteil eines Kraftfahrzeugs.

Das Interesse richtet sich vorliegend insbesondere auf Ultraschallsensorvorrichtungen für Kraftfahrzeuge. Eine derartige Ultraschallsensorvorrichtung umfasst einen Ultraschallsensor, mit dem ein Objekt in einem Umgebungsbereich des Kraftfahrzeugs erfasst werden kann. Zu diesem Zweck sendet der Ultraschallsensor ein Ultraschallsignal aus. Das von dem Objekt reflektierte Ultraschallsignal kann ebenfalls mit dem Ultraschallsensor empfangen werden. Anhand der Laufzeit des Ultraschallsignals kann ein Abstand zu dem Objekt bestimmt werden. Derartige Ultraschallsensorvorrichtungen beziehungsweise Ultraschallsensoren können beispielsweise Teil eines Parkassistenzsystems sein, das den Fahrer bei einem Einparkvorgang unterstützt.

Dabei ist es bekannt, dass die Ultraschallsensoren beispielsweise in entsprechenden Öffnungen von Außenverkleidungsteilen des Kraftfahrzeugs angeordnet sind. Beispielsweise können die Ultraschallsensoren in entsprechenden Öffnungen der Stoßfänger des Kraftfahrzeugs angeordnet sein. Darüber hinaus sind Ultraschallsensorvorrichtungen bekannt, bei denen die Ultraschallsensoren verdeckt hinter dem Stoßfänger angeordnet sind. In diesem Fall senden die Ultraschallsensoren das Ultraschallsignal durch das Außenverkleidungsteil hindurch aus und empfangen das reflektierte Ultraschallsignal durch das Außenverkleidungssignal hindurch.

Hierzu beschreibt die DE 10 2010 049 818 A1 eine Anordnung mit einem Außenverkleidungselement für ein Fahrzeug und mit zumindest einem Sensor, welcher an dem Außenverkleidungselement hinter einer die Detektionsfunktion des Sensors nicht beeinträchtigenden Wandung verdeckt positioniert ist. Hierbei ist der Sensor über eine mit dem Außenverkleidungselement verbundene Haltevorrichtung so an die Wandung mit einer Vorspannkraft angepresst, dass er kraftschlüssig mit der Wandung in Position gehalten ist.

Die DE 10 2010 034 491 A1 beischreibt einen Sensorhalter zur Befestigung eines Sensors an einem Verkleidungsteil eines Fahrzeugs, wobei der Sensorhalter an einer Stirnseite einen Befestigungsabschnitt zur Befestigung am Verkleidungsteil, einen Aufnahmeabschnitt zur Aufnahme des Sensors mit einer Einführöffnung zum Einführen des Sensors in den Ausnahmeabschnitt und Sicherungsmitteln, um den eingeführten Sensor um Aufnahmeabschnitt zu halten, aufweist.

DE 10 2006 007 710 A1 beschreibt eine Sensorhalterung mit einer Aufnahme für einen Sensor. Die Halterung weist eine Abdeckung auf, mit der eine hintere Seite der Aufnahme bei Vorhandensein eines Sensors in der Halterung zur Dämpfung von Sensorsignalen abgedeckt ist.

Die EP 1 577 169 A1 beschreibt einen Sensorhalter an einem Stoßfänger eines Kraftfahrzeuges zur Aufnahme von Sensoren. Zum leichten Einbau und Ausbau des Sensors wird vorgeschlagen, dass am Sensorhalter ein klappbarer Halterbügel befestigt ist, der von einer Offenstellung, in der der Sensor in den Sensorhalter einlegbar oder herausnehmbar ist, in eine Schließstellung geklappt werden kann und in der Schließstellung den Sensor im Sensorhalter einklemmt.

Die DE 10 2010 034 260 A1 beschreibt einen Sensorhalter zur Befestigung eines Sensors an einem Verkleidungsteil eines Fahrzeugs mit einem Befestigungsabschnitt zur Befestigung des Sensorhalters am Verkleidungsteil, an den sich ein Aufnahmeabschnitt zur Aufnahme des Sensors anschließt, und mit Sicherungsmitteln, sie in ihrer Sicherungsstellung eine Einführöffnung zumindest teilweise verschließen und unter Vorspannung an einer Gegenfläche des Sensors anliegen.

Die WO 2014016298 A2 offenbart einen Halter für einen Ultraschallsensor zur Halterung des Ultraschallsensorgehäuses an einer Rückseite eines Verkleidungsteils eines Kraftfahrzeugs, wobei der Halter ein Federelement aufweist.

Darüber hinaus ist es aus dem Stand der Technik bekannt, in Kraftfahrzeugen sogenannte Türöffnungsassistenten zu verwenden. Hierbei kann beispielsweise mit Hilfe der Ultraschallsensorvorrichtung überprüft werden, ob sich ein Objekt in einem Öffnungsbereich einer Tür befindet. Falls ein Objekt in dem Öffnungsbereich vorhanden ist, kann die Bewegung der Tür beim Öffnen mit einer Begrenzungseinrichtung begrenzt werden. Alternativ oder zusätzlich kann ein entsprechendes Warnsignal an den Fahrer oder einen anderen Insassen des Kraftfahrzeugs ausgegeben werden, der das Kraftfahrzeug verlassen möchte. Auf diese Weise kann verhindert werden, dass die Tür beim Öffnen mit dem Objekt kollidiert.

Bei der Anwendung der Ultraschallsensorvorrichtung in einem Türöffnungsassistenten werden die Ultraschallsensoren in den Türen des Kraftfahrzeugs verbaut. Hierbei werden die Ultraschallsensoren auf eine Innenseite des Außenverkleidungsteils beziehungsweise des Außenblechs geklebt. Zur Montage an den entsprechenden Sensorpositionen müssen die Sensoren durch relativ kleine Aussparungen des Innenblechs geführt werden. Hierbei wird der Ultraschallsensor üblicherweise in drei Arbeitsschritten montiert. Zuerst wird eine Halteeinrichtung auf das Außenverkleidungsteil geklebt. Anschließend wird der Ultraschallsensor in die Halteeinrichtung eingeführt und mit der Tür verklebt. Zum Schluss kann eine Abdeckeinrichtung auf die Einheit aus Halteeinrichtung und Ultraschallsensor aufgebracht werden. Diese Abdeckeinrichtung bringt dabei eine Vorspannkraft auf den Ultraschallsensor in Richtung der Fahrzeugaußenseite auf. Durch diese Vorspannkraft wird der Ultraschallsensor auf die Innenseite des Außenverkleidungsteils beziehungsweise des Türblechs gedrückt und die Klebung kann unter der Vorspannkraft beziehungsweise dem Anpressdruck ausgehärtet werden. Eine derartige Montage weist allerdings den Nachteil auf, dass die einzelnen Teile üblicherweise durch kleine Öffnungen des Türinnenblechs geführt werden müssen. Dies führt dazu, dass die Montage zeitaufwendig und komplex ist.

Es ist Aufgabe der vorliegenden Erfindung, eine Lösung aufzuzeigen, wie eine Ultraschallsensorvorrichtung der eingangs genannten Art einfach und kostengünstig an dem Außenverkleidungsteil montiert werden kann.

Diese Aufgabe wird erfindungsgemäß durch eine Ultraschallsensorvorrichtung, durch eine Verkleidungsanordnung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Ultraschallsensorvorrichtung für ein Kraftfahrzeug umfasst einen Ultraschallsensor, welcher eine Membran zum Aussenden und/oder Empfangen eines Ultraschallsignals aufweist. Darüber hinaus umfasst die Ultraschallsensorvorrichtung eine Befestigungsvorrichtung, welche dazu ausgelegt ist, in einer bestimmungsgemäßen Einbaulage der Ultraschallsensorvorrichtung an dem Außenverkleidungsteil des Kraftfahrzeugs die Membran mit einer Vorspannkraft an eine Innenseite des Außenverkleidungsteils zu drücken. Die Befestigungsvorrichtung weist eine Halteeinrichtung und eine Abdeckeinrichtung auf. Dabei ist die Halteeinrichtung an der Innenseite des Außenverkleidungsteils anordenbar und weist eine Öffnung auf, in welcher die Membran angeordnet ist. Die Abdeckeinrichtung weist eine Aufnahme auf, in welcher eine der Membran gegenüberliegende Rückseite des Ultraschallsensors gehalten ist. Zudem sind die Abdeckeinrichtung und die Halteeinrichtung formschlüssig verbunden.

Die Ultraschallsensorvorrichtung umfasst einen Ultraschallsensor, der beispielsweise eine topfförmige Membran aufweisen kann. Die topfförmige Membran kann insbesondere aus Aluminium gebildet sein. Eine von der Mantelfläche verschiedene Bodenfläche der Membran kann als Aussendefläche für ein Ultraschallsignal dienen. Hierzu kann die Membran beziehungsweise die Bodenfläche mit einem Piezoelement zu mechanischen Schwingungen angeregt werden. In gleicher Weise können mit der Membran die von einem Objekt im Umgebungsbereich des Kraftfahrzeugs reflektierten Ultraschallsignale empfangen werden. Die Membran wird hierbei durch das von dem Objekt reflektierte Ultraschallsignal zu mechanischen Schwingungen angeregt. Diese mechanischen Schwingungen können mit dem Piezoelement erfasst werden. Anhand der Laufzeit zwischen dem Aussenden des Ultraschallsignals und dem Empfangen des von dem Objekt reflektierten Ultraschallsignals kann der Abstand zwischen dem Ultraschallsensor und dem Objekt bestimmt werden. In der bestimmungsgemäßen Einbaulage ist der Ultraschallsensor mittels der Befestigungsvorrichtung verdeckt hinter dem Außenverkleidungsteil des Kraftfahrzeugs angeordnet. Das Außenverkleidungsteil kann beispielsweise ein Stoßfänger sein. Bevorzugt ist das Außenverkleidungsteil ein Teil einer Tür eines Kraftfahrzeugs, beispielsweise ein Türblech. Die Ultraschallsensorvorrichtung Teil eines Türöffnungsassistenten des Kraftfahrzeugs sein.

Die Befestigungsvorrichtung, mittels welcher der Ultraschallsensor unter Vorspannung an der Innenseite des Außenverkleidungsteils geklebt wird, ist vorliegend zweiteilig ausgebildet. Die Befestigungsvorrichtung weist eine Halteeinrichtung und eine Abdeckeinrichtung auf. Bei der Montage der Ultraschallsensorvorrichtung an dem Außenverkleidungsteil beziehungsweise an dem Türblech kann zunächst die Halteeinrichtung an der Innenseite des Außenverkleidungsteils angeordnet werden. Beispielsweise kann die Halteeinrichtung an die Innenseite des Außenverkleidungsteils geklebt werden. Die Abdeckeinrichtung weist eine Aufnahme auf, in die der Ultraschallsensor eingebracht werden kann. Dabei kann der Ultraschallsensor derart in die Aufnahme eingebracht werden, dass eine Rückseite des Ultraschallsensors, die der Membran gegenüberliegt, in der Aufnahme gehalten ist. Die Rückseite des Ultraschallsensors kann beispielsweise einem Gehäuse des Ultraschallsensors zugeordnet sein. Somit kann der Ultraschallsensor zunächst mit der Abdeckeinrichtung verbunden werden. Anschließend kann die Abdeckeinrichtung, die den Ultraschallsensor hält, mit der Halteeinrichtung formschlüssig verbunden werden. Die Halteeinrichtung weist eine entsprechende Öffnung beziehungsweise Durchgangsöffnung auf, in welcher die Membran angeordnet ist. Die Membran ist bevorzugt derart in der Öffnung angeordnet, dass diese mittels der Vorspannkraft gegen die Innenseite des Außenverkleidungsteils gedrückt wird. Durch die Befestigungsvorrichtung, welche die Halteeinrichtung und die Abdeckeinrichtung aufweist, kann die Montage des Ultraschallsensors an dem Außenverkleidungsteil deutlich vereinfacht werden.

Erfindungsgemäß weist die Abdeckeinrichtung zumindest ein Federelement zum Bereitstellen der Vorspannkraft auf. Das zumindest eine Federelement kann durch einen Teil beziehungsweise einen Bereich der Abdeckeinrichtung gebildet sein. Das zumindest eine Federelement kann elastisch verformbar ausgebildet sein. Das zumindest eine Federelement dient insbesondere dazu, den Ultraschallsensor mit der Vorspannkraft derart zu beaufschlagen, dass bei einer Verbindung der Abdeckeinrichtung und der Halteeinrichtung die Membran mit der Vorspannkraft auf die Innenseite des Außenverkleidungsteils gedrückt wird. Somit kann mittels des zumindest einen Federelements auf einfache Weise die Vorspannkraft bereitgestellt werden. Es kann auch vorgesehen sein, dass die Abdeckeinrichtung mehrere Federelemente aufweist.

Erfindungsgemäß weist der Ultraschallsensor ein Gehäuse auf, wobei das Gehäuse zumindest eine Erhebung aufweist, auf welche das zumindest eine Federelement drückt. Der Ultraschallsensor kann ein Gehäuse aufweisen, das beispielsweise aus einem Kunststoff gebildet ist. Das Gehäuse kann die topfförmige Membran zumindest teilweise umgeben. Innerhalb des Gehäuses kann die Elektronik des Ultraschallsensors sowie das piezoelektrische Element angeordnet sein. An einer Außenseite des Gehäuses kann zumindest ein Erhebung beziehungsweise eine Rastnase vorgesehen sein, gegen welche das zumindest eine Federelement drückt. Dabei kann das zumindest eine Federelement und die Erhebung so ausgebildet sein, dass die Vorspannkraft in Richtung der Senderichtung des Ultraschallsensors, in der auch das Ultraschallsignal ausgesendet wird, gedrückt wird. Insbesondere kann die Vorspannkraft derart wirken, dass diese im Wesentlichen senkrecht zu einer Oberfläche der Innenseite des Außenverkleidungsteils und/oder im Wesentlichen senkrecht zu der Bodenfläche der Membran drückt.

Weiterhin ist es vorteilhaft, wenn die Aufnahme der Abdeckeinrichtung zumindest ein Klemmelement aufweist, welches zum Halten der Rückseite des Ultraschallsensors mit einem korrespondierenden Klemmbereich des Gehäuses formschlüssig verbunden ist. Innerhalb der Aufnahme kann die Abdeckeinrichtung entsprechende Stege aufweisen, zwischen welchen eine Erhebung oder ein Vorsprung, der an der Außenseite des Gehäuses angeordnet ist, geklemmt werden kann. Die Verbindung zwischen dem zumindest einen Klemmelement und dem Klemmbereich kann auch kraftschlüssig sein. Das zumindest eine Klemmelement und der korrespondierende Klemmbereich des Gehäuses können derart ausgebildet sein, dass der Ultraschallsensor relativ zu der Abdeckeinrichtung entlang der Senderichtung bewegt werden kann. Ferner können das zumindest eine Klemmelement und der korrespondierende Klemmbereich derart ausgestaltet sein, dass eine Bewegung in eine von der Senderichtung verschiedene Richtung und/oder eine Drehbewegung nicht ermöglicht wird. Durch das zumindest eine Klemmelement und dem korrespondierenden Klemmbereich kann der Ultraschallsensor nach dem Verbinden der Halteeinrichtung und der Abdeckeinrichtung in Richtung der Abdeckeinrichtung bewegt werden und dabei durch das zumindest eine Federelement abgestützt werden. Das zumindest eine Federelement kann nach dem Verbinden der Abdeckeinrichtung und der Halteeinrichtung durch das Gehäuse des Ultraschallsensors ausgelenkt werden, wodurch die Vorspannkraft mittels des zumindest einen Federelements auf den Ultraschallsensor aufgebracht wird, und der Ultraschallsensor beziehungsweise die Membran des Ultraschallsensors gegen die Innenseite des Außenverkleidungsteils gedrückt wird.

In einer Ausführungsform weist die Abdeckeinrichtung eine Mehrzahl von Rasthaken auf, welche jeweils mit einer korrespondierenden Erhebung der Halteeinrichtung mittels einer Schnappverbindung formschlüssig verbunden sind. Mit anderen Worten können die Abdeckeinrichtung und die Halteeinrichtung rastend miteinander verbunden sein. Bei der Verbindung der Abdeckeinrichtung mit der Halteeinrichtung beziehungsweise wenn die Abdeckeinrichtung in Richtung der Halteeinrichtung bewegt wird, können die Rasthaken elastisch verformt werden. Wenn die Rasthaken über die korrespondierende Erhebung der Halteeinrichtung hinweg geschoben sind, können diese rastend mit der Erhebung verbunden sein. Somit kann auf einfache Weise eine formschlüssige Verbindung zwischen der Abdeckeinrichtung und der Halteeinrichtung bereitgestellt werden.

Bevorzugt sind die Rasthaken entlang einer Umfangsrichtung der Abdeckeinrichtung nebeneinander angeordnet und die Erhebung der Halteeinrichtung ist entlang einer Umfangsrichtung der Halteeinrichtung umlaufend ausgebildet. Die Abdeckeinrichtung kann beispielsweise eine im Wesentlichen runde Querschnittsfläche aufweisen. Die einzelnen Rasthaken sind also entlang der Umfangsrichtung nebeneinander angeordnet. Ebenso kann die Erhebung der Halteeinrichtung entlang der Umfangsrichtung der Halteeinrichtung umlaufend ausgebildet sein. Somit kann eine Schnappverbindung beziehungsweise Rastverbindung zwischen der Abdeckeinrichtung und der Halteeinrichtung bereitgestellt werden, welche eine Haltekraft entlang der kompletten Umfangsrichtung der Halteeinrichtung und der kompletten Umfangsrichtung der Abdeckeinrichtung ermöglicht. Somit kann eine zuverlässige Verbindung zwischen der Abdeckeinrichtung und der Halteeinrichtung bereitgestellt werden.

Bevorzugt weist die Halteeinrichtung eine Mehrzahl von elastisch verformbaren Auflageelementen auf, welche jeweils an der Innenseite des Außenverkleidungsteils anordenbar sind. Die Halteeinrichtung beziehungsweise der Bereich der Halteeinrichtung, der mit der Innenseite des Außenverkleidungsteils verbunden wird, kann in mehrere Bereiche beziehungsweise Auflageelemente eingeteilt sein. Diese Auflageelemente können elastisch verformbar ausgebildet sein. Somit kann beispielsweise erreicht werden, dass die einzelnen Auflageelemente an die Formgebung des Außenverkleidungsteils angepasst werden können. An den jeweiligen Bereichen der Auflageelemente, die der Innenseite des Außenverkleidungsteils zugeordnet sind, kann ein entsprechender Klebstoff aufgebracht werden. Somit kann eine zuverlässige Verbindung zwischen der Halteeinrichtung und dem Außenverkleidungsteil bereitgestellt werden.

Eine erfindungsgemäße Verkleidungsanordnung für ein Kraftfahrzeug umfasst eine erfindungsgemäße Ultraschallsensorvorrichtung sowie ein Außenverkleidungsteil.

Bevorzugt ist der Ultraschallsensor dazu ausgelegt, das Ultraschallsignal durch das Außenverkleidungsteil hindurch auszusenden und/oder das Ultraschallsignal durch das Außenverkleidungsteil hindurch zu empfangen. Bevorzugt ist die Membran des Ultraschallsensors stoffschlüssig mit dem Außenverkleidungsteil verbunden. Wenn die Membran des Ultraschallsensors zum Aussenden des Ultraschallsignals zu mechanischen Schwingungen angeregt wird, wird auch das Außenverkleidungsteil zu mechanischen Schwingungen angeregt. Somit kann das Ultraschallsignal durch das Außenverkleidungsteil hindurch gesendet werden. Wenn das ausgesendete Ultraschallsignal von einem Objekt in dem Umgebungsbereich des Kraftfahrzeugs reflektiert wird, trifft es wieder auf das Außenverkleidungsteil, wodurch das Außenverkleidungsteil zu mechanischen Schwingungen angeregt wird. Die Membran, die stoffschlüssig mit dem Außenverkleidungsteil verbunden ist, wird ebenfalls zu mechanischen Schwingungen angeregt. Somit kann das Ultraschallsignal quasi durch das Außenverkleidungsteil hindurch empfangen werden.

Bevorzugt ist die Halteeinrichtung mittels einer Klebeverbindung mit der Innenseite des Außenverkleidungsteils verbunden. So kann beispielsweise an die jeweiligen Auflageelemente der Halteeinrichtung ein Klebstoff aufgebracht werden und dieser mit der Innenseite des Außenverkleidungsteils in Kontakt gebracht werden. Der Klebstoff kann beispielsweise als flüssiger Klebstoff oder als Klebepad aufgebracht werden. Somit kann auf einfache Weise eine stoffschlüssige Verbindung zwischen der Halteeinrichtung und dem Außenverkleidungsteil bereitgestellt werden.

Weiterhin ist es vorteilhaft, wenn die Membran des Ultraschallsensors mittels eines Klebeelements mit der Innenseite des Außenverkleidungsteils verbunden ist. Dabei können die Membran und das Außenverkleidungsteil derart miteinander verklebt werden, dass die Aussendefläche beziehungsweise die Bodenfläche der Membran im Wesentlichen parallel zu der Innenseite des Außenverkleidungsteils angeordnet ist. Als das Klebeelement kann beispielsweise ein Klebepad verwendet werden. Durch die Vorspannkraft, die mit dem zumindest einen Federelement bereitgestellt wird, wird die Membran während des Aushärtens des Klebstoffs gegen die Innenseite des Außenverkleidungsteils gedrückt. Somit kann eine zuverlässige stoffschlüssige Verbindung zwischen der Membran und dem Außenverkleidungsteil bereitgestellt werden.

Bevorzugt ist das Außenverkleidungsteil ein Teil einer Tür des Kraftfahrzeugs. Beispielsweise kann das Außenverkleidungsteil ein entsprechendes Türblech sein. Innerhalb der Tür kann eine entsprechende Aussparung vorgesehen sein, in welcher die Ultraschallsensorvorrichtung angeordnet ist.

Ein erfindungsgemäßes Kraftfahrzeug umfasst zumindest eine erfindungsgemäße Verkleidungsanordnung. Das Kraftfahrzeug kann insbesondere als Personenkraftwagen ausgebildet sein. Das Kraftfahrzeug kann ein Fahrerassistenzsystem aufweisen, das beispielsweise als Türöffnungsassistent ausgebildet ist.

Ein erfindungsgemäßes Verfahren dient zum Montieren einer Ultraschallsensorvorrichtung an einem Außenverkleidungsteil eines Kraftfahrzeugs. Hierbei wird ein Ultraschallsensor, welcher eine Membran zum Aussenden und/oder Empfangen eines Ultraschallsignals aufweist, mittels einer Befestigungsvorrichtung an einem Außenverkleidungsteil des Kraftfahrzeugs verbunden. Dabei wird mittels der Befestigungsvorrichtung in einer bestimmungsgemäßen Einbaulage der Ultraschallsensorvorrichtung an dem Außenverkleidungsteil die Membran mit einer Vorspannkraft an eine Innenseite des Außenverkleidungsteils gedrückt. Ferner wird eine Halteeinrichtung der Befestigungsvorrichtung an der Innenseite des Außenverkleidungsteils angeordnet. Abschließend wird der Ultraschallsensor in einer Abdeckeinrichtung der Befestigungsvorrichtung derart angeordnet, dass eine der Membran gegenüberliegende Rückseite des Ultraschallsensors in einer Aufnahme der Abdeckeinrichtung gehalten wird. Schließlich werden die Abdeckung und die Halteeinrichtung derart formschlüssig verbunden, dass die Membran in einer Öffnung der Halteeinrichtung angeordnet ist.

Durch das Verfahren kann die Ultraschallsensorvorrichtung beziehungsweise der Ultraschallsensor einfacher und schneller an dem Außenverkleidungsteil befestigt werden. Insbesondere kann im Vergleich zu bekannten Montageverfahren ein Arbeitschritt eingespart werden.

Die mit Bezug auf die erfindungsgemäße Ultraschallsensorvorrichtung vorgestellten bevorzugten Ausführungsformen und deren Vorteile gelten entsprechend für die erfindungsgemäße Verkleidungsanordnung, das erfindungsgemäße Kraftfahrzeug sowie das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand bevorzugter Ausführungsbeispiele sowie unter Bezugnahme auf die beigefügten Zeichnungen näher erläutert.

### Dabei zeigen:

- Fig. 1: eine Verkleidungsanordnung, welche eine Ultraschallsensorvorrichtung und ein Außenverkleidungsteil eines Kraftfahrzeugs aufweist in einer Explosionsdarstellung;
- Fig. 2: eine Abdeckeinrichtung und einen Ultraschallsensor der Ultraschallsensorvorrichtung in einer Perspektivansicht;
- Fig. 3: den Ultraschallsensor und die Abdeckeinrichtung gemäß Fig. 2, wobei der Ultraschallsensor in der Abdeckeinrichtung gehalten ist;
- Fig. 4: die Ultraschallsensorvorrichtung in einer Perspektivansicht, wobei der in der Abdeckeinrichtung gehaltene Ultraschallsensor mit der Halteeinrichtung verbunden ist; und
- Fig. 5: die Ultraschallsensorvorrichtung gemäß Fig. 4, wobei die Abdeckeinrichtung und die Halteeinrichtung geschnitten dargestellt sind.

In den Figuren werden gleiche und funktionsgleiche Elemente mit den gleichen Bezugszeichen versehen.

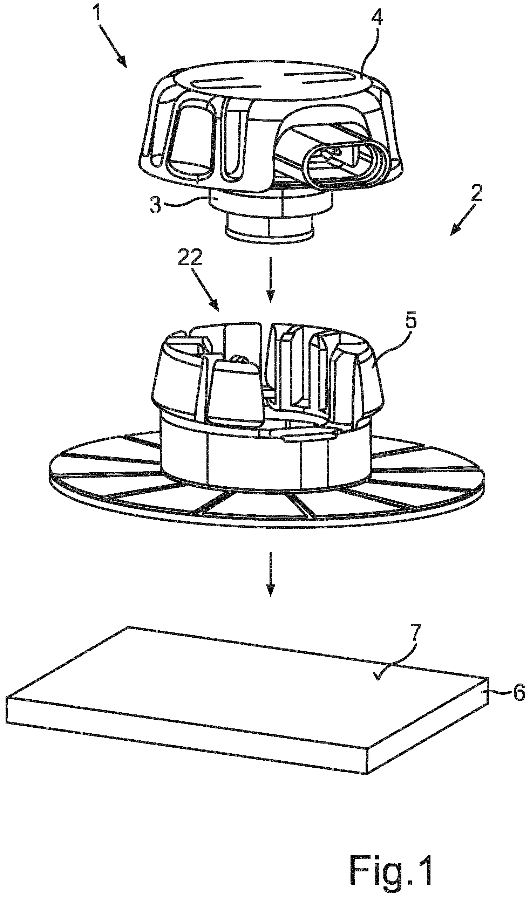

Fig. 1 zeigt eine Verkleidungsanordnung 1 in einer Explosionsdarstellung. Die Verkleidungsanordnung 1 umfasst eine Ultraschallsensorvorrichtung 2. Die Ultraschallsensorvorrichtung 2 umfasst wiederum einen Ultraschallsensor 3. Der Ultraschallsensor 3 dient zum Aussenden und/oder Empfangen eines Ultraschallsignals. Der Ultraschallsensor 3 ist in einer Abdeckeinrichtung 4 angeordnet. Die Ultraschallsensorvorrichtung 1 umfasst ferner eine Halteeinrichtung 5, die mit einem Außenverkleidungsteil 6 eines Kraftfahrzeugs verbunden werden kann. Die Abdeckeinrichtung 4 und die Halteeinrichtung 5 bilden zusammen eine Befestigungsvorrichtung. Das Außenverkleidungsteil 6 kann insbesondere ein Türblech des Kraftfahrzeugs sein. Dabei kann die Halteeinrichtung 5 mit einer Innenseite 7 des Außenverkleidungsteils 6 verbunden werden. Die Innenseite 7 befindet sich auf einer einer Außenseite des Außenverkleidungsteils 6 gegenüberliegenden Seite. Die Außenseite des Außenverkleidungsteils 6 ist für einen Betrachter, der vor dem Kraftfahrzeug steht, von außen sichtbar ist.

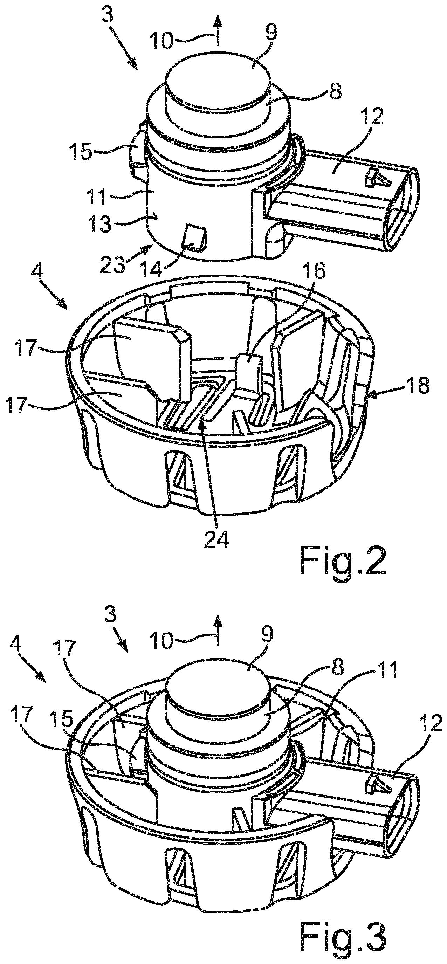

Fig. 2 zeigt den Ultraschallsensor 3 und die Befestigungseinrichtung 4 in einer Perspektivansicht. Hierbei ist zu erkennen, dass der Ultraschallsensor 3 eine Membran 8 aufweist. Die Membran 8 ist in dem vorliegenden Ausführungsbeispiel topfförmig ausgebildet und kann beispielsweise aus Aluminium gebildet sein. Auf einer Aussendefläche beziehungsweise Bodenfläche der Membran 8 ist ein Klebeelement 9 angeordnet. Mit diesem Klebeelement 9, das beispielsweise als Klebepad ausgebildet ist, kann die Membran 8 auf der Innenseite 7 des Außenverkleidungsteils 6 befestigt werden. Zum Aussenden des Ultraschallsignals kann die Membran 8 beziehungsweise die Aussendefläche der Membran 8 mittels eines piezoelektrischen Elements zu mechanischen Schwingungen angeregt werden. Dabei kennzeichnet der Pfeil 10 die Senderichtung beziehungsweise Hauptaussenderichtung des Ultraschallsensors 3. Mittels der Membran 8 können ebenfalls von einem Objekt reflektierte Ultraschallsignale empfangen werden.

Der Ultraschallsensor 3 umfasst ferner ein Gehäuse 11, das beispielsweise aus einem Kunststoff gebildet sein kann. Dabei kann die Membran 8 zumindest bereichsweise innerhalb des Gehäuses 11 angeordnet sein. Das Gehäuse 11 umfasst ferner einen Steckerabschnitt 12, durch welchen entsprechende elektrische Leitungen zur Kontaktierung des Ultraschallsensors 3 beziehungsweise der Elektronik des Ultraschallsensors 3 geführt werden können. An einer Außenseite 13 des Gehäuses 11 ist ferner zumindest eine Erhebung 14 angeordnet. Ferner ist an der Außenseite 13 des Gehäuses 11 ein Klemmbereich 15 in Form einer weiteren Erhebung angeordnet.

Die Befestigungseinrichtung 4 kann beispielsweise aus einem Kunststoff gebildet sein. Die Befestigungseinrichtung 4 weist eine Aufnahme 24 für den Ultraschallsensor 3 auf. In der Aufnahme 24 kann eine Rückseite 23, welche dem Gehäuse 11 zugeordnet ist, eingebracht werden. Die Befestigungseinrichtung 4 umfasst zumindest ein Federelement 16, welches auf die Erhebungen 14 des Ultraschallsensors 3 drücken kann. Darüber hinaus umfasst die Befestigungseinrichtung 4 zumindest ein Klemmelement 17. In dem vorliegenden Ausführungsbeispiel weist die Befestigungseinrichtung 4 zwei Klemmelemente 17 auf, die korrespondierend zu dem Klemmbereich 15 des Gehäuses 11 des Ultraschallsensors 3 ausgebildet sind. Zudem weist die Befestigungseinrichtung 4 eine Aussparung 18 für den Steckerbereich 12 auf.

Fig. 3 zeigt den Ultraschallsensor 3, der in der Befestigungseinrichtung 4 beziehungsweise in der Aufnahme 24 angeordnet ist. Hierbei ist zu erkennen, dass der Klemmbereich 15 des Ultraschallsensors 3 zwischen die Klemmelemente 17 der Befestigungseinrichtung 4 geklemmt ist. Somit wird eine kraftschlüssige Verbindung zwischen dem Klemmbereich 15 und den Klemmelementen 17 bereitgestellt. Durch diese Verbindung wird weiter ermöglicht, dass der Ultraschallsensor 3 relativ zu der Befestigungseinrichtung 4 entlang der Senderichtung 10 bewegt werden kann.

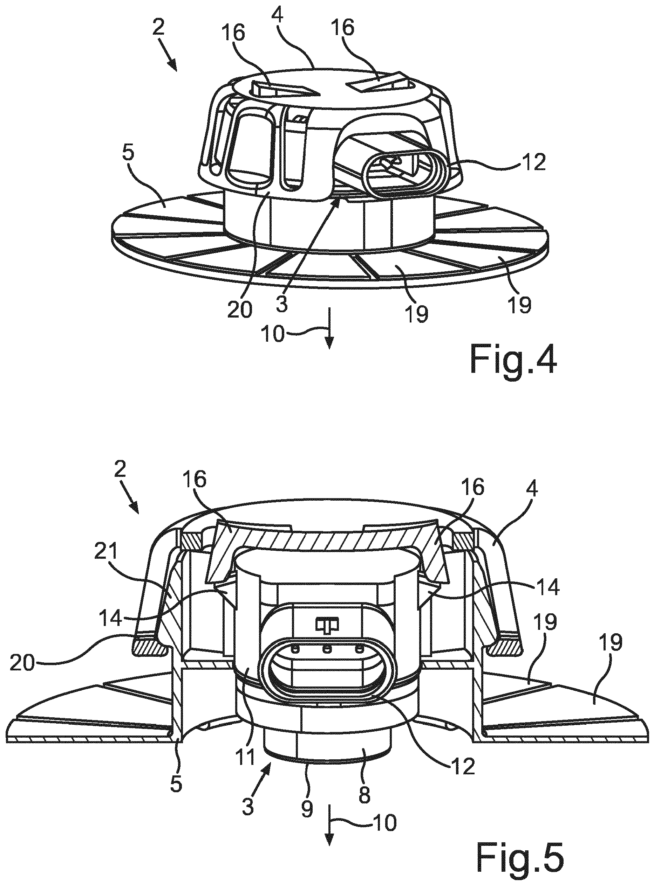

Fig. 4 zeigt die Ultraschallsensorvorrichtung 2 in einer Perspektivansicht. Dabei ist die Befestigungseinrichtung 4, in welcher der Ultraschallsensor 3 angeordnet ist, mit der Halteeinrichtung 5 verbunden. An der Oberseite der Befestigungseinrichtung 4 sind die beiden Federelemente 16 zu erkennen, welche gegen den Ultraschallsensor 3 drücken und somit eine Vorspannkraft in Richtung der Senderichtung (Pfeil 10) wirken. Ferner ist zu erkennen, dass die Halteeinrichtung 5 eine Mehrzahl von Auflageelementen 19 aufweist, die beispielsweise elastisch verformbar ausgebildet sind. Die Auflageelemente 19 können mit der Innenseite 7 des Außenverkleidungsteils 6 beispielsweise mit einem Klebstoff verbunden werden.

Fig. 5 zeigt die Ultraschallsensorvorrichtung 2 gemäß Fig. 4, wobei die Abdeckeinrichtung 4 und die Halteeinrichtung 5 geschnitten dargestellt sind. Hierbei ist zu erkennen, dass die Abdeckeinrichtung 4 eine Mehrzahl von Rasthaken 20 aufweist, die entlang einer Umfangsrichtung der Befestigungseinrichtung 4 nebeneinander angeordnet sind. Diese Rasthaken greifen in eine umlaufend ausgebildete Erhebung 21 der Halteeinrichtung 5. Somit können die Befestigungseinrichtung 4 und die Halteeinrichtung 5 mittels einer Schnappverbindung beziehungsweise Rastverbindung miteinander verbunden werden. Zudem ist zu erkennen, dass die Federelemente 16 im verbundenen Zustand der Befestigungseinrichtung 4 und der Halteeinrichtung 3 elastisch verformt sind und somit die Vorspannkraft auf die Erhebungen 14 und somit auf den Ultraschallsensor 3 ausüben. Dadurch wird erreicht, dass die Membran 8 beziehungsweise das Klebepad 9 auf die Innenseite 7 des Außenverkleidungsteils gedrückt wird. Hierbei kann eine zuverlässige Klebeverbindung zwischen der Membran 8 und dem Außenverkleidungsteil 6 bereitgestellt werden.

Bei der Montage der Ultraschallsensorvorrichtung 2 an dem Außenverkleidungsteil 6 kann zunächst die Halteeinrichtung 5 beziehungsweise die einzelnen Rückseiten der Auflageflächen 19 an die Innenseite 7 des Außenverkleidungsteils 6 geklebt werden. Anschließend kann der Ultraschallsensor 3 mit der Abdeckeinrichtung 4 verbunden werden. Hierbei wird der Ultraschallsensor 3 in der Befestigungseinrichtung 4 durch die Verbindung des Klemmbereichs 15 und der Klemmelemente 17 gehalten. Anschließend kann die Einheit aus Ultraschallsensor 3 und Befestigungseinrichtung 4 mit Halteeinrichtung 5 verbunden werden. Dabei kann die Befestigungseinrichtung 4 in Richtung des Pfeils 10 auf die Halteeinrichtung 5 gedrückt werden. Hierbei werden die Rasthaken 20 elastisch verformt, bis diese an der Erhebung 21 einrasten. Dabei wird durch das Federelement 16 die Vorspannkraft auf die Membran 8 beziehungsweise das Klebeelement 9 ausgeübt, bis der Klebstoff des Klebeelements 9 ausgehärtet ist. Auf diese Weise kann eine vereinfachte Montage der Ultraschallsensorvorrichtung 2 an dem Außenverkleidungsteil 6 beziehungsweise dem Türblech ermöglicht werden.

## Patentansprüche

1. Ultraschallsensorvorrichtung (2) für ein Kraftfahrzeug, mit einem Ultraschallsensor (3), welcher eine Membran (8) zum Aussenden und/oder Empfangen eines Ultraschallsignals aufweist, und mit einer Befestigungsvorrichtung, welche dazu ausgelegt ist, in einer bestimmungsgemäßen Einbaulage der Ultraschallsensorvorrichtung (2) an einem Außenverkleidungsteil (6) des Kraftfahrzeugs die Membran (8) mit einer Vorspannkraft an eine Innenseite (7) des Außenverkleidungsteils (6) zu drücken, wobei in der bestimmungsgemäßen Einbaulage der Ultraschallsensor (3) mittels der Befestigungsvorrichtung verdeckt hinter dem Außenverkleidungsteil (6) des Kraftfahrzeugs angeordnet ist,
wobei die Befestigungsvorrichtung eine Halteeinrichtung (5) und eine Abdeckeinrichtung (4) aufweist, wobei die Halteeinrichtung (5) an der Innenseite (7) des Außenverkleidungsteils (6) anordenbar ist und eine Öffnung (22) aufweist, in welcher die Membran (8) angeordnet ist, und wobei die Abdeckeinrichtung (4) eine Aufnahme (24) aufweist, in welcher eine der Membran (8) gegenüberliegenden Rückseite (23) des Ultraschallsensors (3) gehalten ist, und wobei die Abdeckeinrichtung (4) und die Halteeinrichtung (5) formschlüssig verbunden sind,
**dadurch gekennzeichnet, dass**
die Abdeckeinrichtung (4) zumindest ein Federelement (16) zum Bereitstellen der Vorspannkraft aufweist, und
der Ultraschallsensor (3) ein Gehäuse (11) aufweist, wobei das Gehäuse (11) zumindest eine Erhebung (14) aufweist, auf welche das zumindest eine Federelement (16) drückt.

2. Ultraschallsensorvorrichtung (2) nach Anspruch 1,
**dadurch gekennzeichnet, dass**
das zumindest eine Federelement (16) dazu dient, den Ultraschallsensor mit der Vorspannkraft derart zu beaufschlagen, dass bei einer Verbindung der Abdeckeinrichtung (4) und der Halteeinrichtung (5) die Membran (8) mit der Vorspannkraft auf die Innenseite (7) des Außenverkleidungsteils (6) gedrückt wird.

3. Ultraschallsensorvorrichtung (2) nach einem der vorhergehenden Ansprüche, **dadurch gekennzeichnet, dass**
die Aufnahme (24) der Abdeckeinrichtung (4) zumindest ein Klemmelement (17) aufweist, welches zum Halten der Rückseite (23) des Ultraschallsensors (3) mit einem korrespondierenden Klemmbereich (15) des Gehäuses (11) formschlüssig verbunden ist.

4. Ultraschallsensorvorrichtung (2) nach einem der vorhergehenden Ansprüche, **dadurch gekennzeichnet, dass**
die Abdeckeinrichtung (4) eine Mehrzahl von Rasthaken (20) aufweist, welche jeweils mit einer korrespondierenden Erhebung (21) der Halteeinrichtung (5) mittels einer Schnappverbindung formschlüssig verbunden sind.

5. Ultraschallsensorvorrichtung (2) nach Anspruch 4,
**dadurch gekennzeichnet, dass**
die Rasthaken (20) entlang einer Umfangsrichtung der Abdeckeinrichtung (4) nebeneinander angeordnet sind und die Erhebung (21) der Halteeinrichtung (5) entlang einer Umfangsrichtung der Halteeinrichtung (5) umlaufend ausgebildet ist.

6. Ultraschallsensorvorrichtung (2) nach einem der vorhergehenden Ansprüche, **dadurch gekennzeichnet, dass**
Halteeinrichtung (5) eine Mehrzahl von elastisch verformbaren Auflageelementen (19) aufweist, welche jeweils an der Innenseite (7) des Außenverkleidungsteils (6) anordenbar sind.

7. Verkleidungsanordnung (1) für ein Kraftfahrzeug mit einer Ultraschallsensorvorrichtung (2) nach einem der vorhergehenden Ansprüche und einem Außenverkleidungsteil (6).

8. Verkleidungsanordnung (1) nach Anspruch 7,
**dadurch gekennzeichnet, dass**
der Ultraschallsensor (3) dazu ausgelegt ist, das Ultraschallsignal durch das Außenverkleidungsteil (6) hindurch auszusenden und/oder das Ultraschallsignal durch das Außenverkleidungsteil (6) hindurch zu empfangen.

9. Verkleidungsanordnung (1) nach Anspruch 7 oder 8,
**dadurch gekennzeichnet, dass**
die Halteeinrichtung (5) mittels einer Klebeverbindung mit der Innenseite (7) des Außenverkleidungsteils (6) verbunden ist.

10. Verkleidungsanordnung (1) nach einem der Ansprüche 7 bis 9,
**dadurch gekennzeichnet, dass**
die Membran (8) des Ultraschallsensors (3) mittels eines Klebelements (9) mit der Innenseite (7) des Außenverkleidungsteils (6) verbunden ist.

11. Verkleidungsanordnung (1) nach einem der Ansprüche 7 bis 10,
**dadurch gekennzeichnet, dass**
das Außenverkleidungsteil (6) ein Teil einer Tür des Kraftfahrzeugs ist.

12. Kraftfahrzeug mit zumindest einer Verkleidungsanordnung (1) nach einem der Ansprüche 7 bis 11.

13. Verfahren zum Montieren einer Ultraschallsensorvorrichtung (2) an einem Außenverkleidungsteil (6) eines Kraftfahrzeugs, bei welchem ein Ultraschallsensor (3), welcher eine Membran (8) zum Aussenden und/oder Empfangen eines Ultraschallsignals aufweist, mittels einer Befestigungsvorrichtung an einem Außenverkleidungsteil (6) des Kraftfahrzeugs verbunden wird, wobei mittels der Befestigungsvorrichtung in einer bestimmungsgemäßen Einbaulage der Ultraschallsensorvorrichtung (2) an dem Außenverkleidungsteil (6) die Membran (8) mit einer Vorspannkraft an eine Innenseite (7) des Außenverkleidungsteils (6) gedrückt wird, wobei in der bestimmungsgemäßen Einbaulage der Ultraschallsensor (3) mittels der Befestigungsvorrichtung verdeckt hinter dem Außenverkleidungsteil (6) des Kraftfahrzeugs angeordnet ist,
wobei eine Halteeinrichtung (5) der Befestigungsvorrichtung an der Innenseite (7) des Außenverkleidungsteils (6) angeordnet wird, der Ultraschallsensor (3) in einer Abdeckeinrichtung (4) der Befestigungsvorrichtung derart angeordnet wird, dass eine der Membran (8) gegenüberliegenden Rückseite (23) des Ultraschallsensors (3) in einer Aufnahme (24) der Abdeckeinrichtung (4) gehalten wird und die Abdeckeinrichtung (4) und die Halteeinrichtung (5) derart formschlüssig verbunden werden, dass die Membran (8) in einer Öffnung (22) der Halteeinrichtung (5) angeordnet ist, **dadurch gekennzeichnet, dass** die Abdeckeinrichtung (4) zumindest ein Federelement (16) zum Bereitstellen der Vorspannkraft aufweist, und der Ultraschallsensor (3) ein Gehäuse (11) aufweist, wobei das Gehäuse (11) zumindest eine Erhebung (14) aufweist, auf welche das zumindest eine Federelement (16) drückt.

## Claims

1. Ultrasonic sensor device (2) for a motor vehicle, comprising an ultrasonic sensor (3), which has a diaphragm (8) for transmitting and/or receiving an ultrasonic signal, and comprising a fastening device which is designed to press the diaphragm (8) onto an inner side (7) of the outer trim part (6) with a preloading force in an intended installation position of the ultrasonic sensor device (2) on an outer trim part (6) of the motor vehicle, wherein the ultrasonic sensor (3) is arranged behind the outer trim part (6) of the motor vehicle in a manner concealed by means of the fastening device in the intended installation position, wherein the fastening device has a holding device (5) and a covering device (4), wherein the holding device (5) can be arranged on the inner side (7) of the outer trim part (6) and has an opening (22) in which the diaphragm (8) is arranged, and wherein the covering device (4) has a receptacle (24) in which a rear side (23) of the ultrasonic sensor (3), the rear side being situated opposite the diaphragm (8), is held, and wherein the covering device (4) and the holding device (5) are connected in a form-fitting manner,
**characterized in that** the covering device (4) has at least one spring element (16) for providing the preloading force, and
the ultrasonic sensor (3) has a housing (11), wherein the housing (11) has at least one raised portion (14) onto which the at least one spring element (16) presses.

2. Ultrasonic sensor device (2) according to Claim 1, **characterized in that**
the at least one spring element (16) serves to apply the preloading force to the ultrasonic sensor in such a way that the diaphragm (8) is pressed onto the inner side (7) of the outer trim part (6) with the preloading force when the covering device (4) and the holding device (5) are connected.

3. Ultrasonic sensor device (2) according to either of the preceding claims,
**characterized in that**
the receptacle (24) of the covering device (4) has at least one clamping element (17) which is connected in a form-fitting manner to a corresponding clamping region (15) of the housing (11) in order to hold the rear side (23) of the ultrasonic sensor (3).

4. Ultrasonic sensor device (2) according to either of the preceding claims,
**characterized in that**
the covering device (4) has a plurality of latching hooks (20) which are each connected in a form-fitting manner to a corresponding raised portion (21) of the holding device (5) by means of a snap-action connection.

5. Ultrasonic sensor device (2) according to Claim 4, **characterized in that**
the latching hooks (20) are arranged next to each other along a circumferential direction of the covering device (4) and the raised portion (21) of the holding device (5) is formed in an encircling manner along a circumferential direction of the holding device (5).

6. Ultrasonic sensor device (2) according to either of the preceding claims,
**characterized in that**
the holding device (5) has a plurality of elastically deformable support elements (19) which can each be arranged on the inner side (7) of the outer trim part (6) .

7. Trim arrangement (1) for a motor vehicle comprising an ultrasonic sensor device (2) according to any of the preceding claims and an outer trim part (6).

8. Trim arrangement (1) according to Claim 7, **characterized in that**
the ultrasonic sensor (3) is designed to transmit the ultrasonic signal through the outer trim part (6) and/or to receive the ultrasonic signal through the outer trim part (6).

9. Trim arrangement (1) according to Claim 7 or 8, **characterized in that**
the holding device (5) is connected to the inner side (7) of the outer trim part (6) by means of an adhesive bond.

10. Trim arrangement (1) according to any of Claims 7 to 9,
**characterized in that**
the diaphragm (8) of the ultrasonic sensor (3) is connected to the inner side (7) of the outer trim part (6) by means of an adhesive element (9).

11. Trim arrangement (1) according to any of Claims 7 to 10,
**characterized in that**
the outer trim part (6) is part of a door of the motor vehicle.

12. Motor vehicle having at least one trim arrangement (1) according to any of Claims 7 to 11.

13. Method for mounting an ultrasonic sensor device (2) on an outer trim part (6) of a motor vehicle, in which method an ultrasonic sensor (3), which has a diaphragm (8) for transmitting and/or receiving an ultrasonic signal, is connected to an outer trim part (6) of the motor vehicle by means of a fastening device, wherein the diaphragm (8) is pressed against an inner side (7) of the outer trim part (6) with a preloading force by means of the fastening device in an intended installation position of the ultrasonic sensor device (2) on the outer trim part (6), wherein the ultrasonic sensor (3) is arranged behind the outer trim part (6) of the motor vehicle in a manner concealed by means of the fastening device in the intended installation position,
wherein a holding device (5) of the fastening device is arranged on the inner side (7) of the outer trim part (6), the ultrasonic sensor (3) is arranged in a covering device (4) of the fastening device in such a way that a rear side (23) of the ultrasonic sensor (3), the rear side being situated opposite the diaphragm (8), is held in a receptacle (24) of the covering device (4) and the covering device (4) and the holding device (5) are connected in a form-fitting manner in such a way that the diaphragm (8) is arranged in an opening (22) in the holding device (5),
**characterized in that** the covering device (4) has at least one spring element (16) for providing the preloading force, and
the ultrasonic sensor (3) has a housing (11), wherein the housing (11) has at least one raised portion (14) onto which the at least one spring element (16) presses.

## Revendications

1. Dispositif (2) de détection par ultrasons pour un véhicule automobile, comprenant un capteur à ultrasons (3) qui présente une membrane (8) pour l'émission et/ou la réception d'un signal ultrasonore, et comprenant un dispositif de fixation qui, dans une position de montage appropriée du dispositif (2) de détection par ultrasons sur une pièce d'habillage extérieur (6) du véhicule automobile, est conçu pour presser la membrane (8) avec une force de précharge contre une face intérieure (7) de la pièce d'habillage extérieur (6), le capteur à ultrasons (3) étant, dans la position de montage appropriée, agencé de manière masquée derrière la pièce d'habillage extérieur (6) du véhicule automobile au moyen du dispositif de fixation,
le dispositif de fixation présentant un dispositif de maintien (5) et un dispositif de recouvrement (4), le dispositif de maintien (5) étant apte à être agencé sur la face intérieure (7) de la pièce d'habillage extérieure (6) et présentant une ouverture (22) dans laquelle est agencée la membrane (8), et le dispositif de recouvrement (4) présentant un logement (24) dans lequel est maintenu un côté arrière (23) du capteur à ultrasons (3) opposé à la membrane (8), et le dispositif de recouvrement (4) et le dispositif de maintien (5) étant reliés par complémentarité de formes,
**caractérisé en ce que** le dispositif de recouvrement (4) comporte au moins un élément élastique (16) pour fournir la force de précharge, et
le capteur à ultrasons (3) présente un boîtier (11), le boîtier (11) présentant au moins une saillie (14) sur laquelle s'appuie ledit au moins un élément élastique (16) .

2. Dispositif (2) de détection par ultrasons selon la revendication 1,
caractérisé en ce
l'au moins un élément élastique (16) sert à solliciter le capteur à ultrasons avec la force de précharge de telle sorte que, lorsque le dispositif de recouvrement (4) et le dispositif de maintien (5) sont reliés, la membrane (8) est pressée avec la force de précharge sur la face intérieure (7) de la pièce d'habillage extérieure (6).

3. Dispositif (2) de détection par ultrasons selon l'une des revendications précédentes,
caractérisé en ce
le logement (24) du dispositif de recouvrement (4) présente au moins un élément de serrage (17) qui, pour maintenir la face arrière (23) du capteur à ultrasons (3), est relié par complémentarité de formes à une zone de serrage (15) correspondante du boîtier (11).

4. Dispositif (2) de détection par ultrasons selon l'une des revendications précédentes,
caractérisé en ce
le dispositif de recouvrement (4) présente une pluralité de crochets d'encliquetage (20) dont chacun est relié par complémentarité de forme à une saillie (21) correspondante du dispositif de maintien (5) au moyen d'une liaison par encliquetage.

5. Dispositif (2) de détection par ultrasons selon la revendication 4,
caractérisé en ce
les crochets d'encliquetage (20) sont agencés les uns à côté des autres le long d'une direction circonférentielle du dispositif de recouvrement (4) et la saillie (21) du dispositif de maintien (5) est réalisée de manière à s'étendre circonférentiellement le long d'une direction circonférentielle du dispositif de maintien (5).

6. Dispositif de détection ultrasonore (2) selon l'une des revendications précédentes,
caractérisé en ce
le dispositif de maintien (5) présente une pluralité d'éléments d'appui (19) déformables élastiquement, qui sont aptes à être chacun agencés sur la face intérieure (7) de la pièce d'habillage extérieure (6).

7. Ensemble d'habillage (1) pour un véhicule automobile, comprenant un dispositif (2) de détection par ultrasons selon l'une des revendications précédentes et une pièce d'habillage extérieur (6).

8. Ensemble d'habillage (1) selon la revendication 7, caractérisé en ce
le capteur à ultrasons (3) est conçu pour émettre le signal ultrasonore à travers la pièce d'habillage extérieur (6) et/ou pour recevoir le signal ultrasonore à travers la pièce d'habillage extérieur (6).

9. Ensemble d'habillage (1) selon la revendication 7 ou 8,
caractérisé en ce
le dispositif de maintien (5) est relié à la face intérieure (7) de la pièce d'habillage extérieur (6) au moyen d'une liaison adhésive.

10. Ensemble d'habillage (1) selon l'une quelconque des revendications 7 à 9,
caractérisé en ce
la membrane (8) du capteur à ultrasons (3) est reliée à la face intérieure (7) de la pièce d'habillage extérieur (6) au moyen d'un élément adhésif (9).

11. Ensemble d'habillage (1) selon l'une quelconque des revendications 7 à 10,
caractérisé en ce
la pièce d'habillage extérieure (6) fait partie d'une portière du véhicule automobile.

12. Véhicule automobile comportant au moins un ensemble d'habillage (1) selon l'une quelconque des revendications 7 à 11.

13. Procédé de montage d'un dispositif (2) de détection par ultrasons sur une pièce d'habillage extérieur (6) d'un véhicule automobile, dans lequel un capteur à ultrasons (3), qui présente une membrane (8) pour l'émission et/ou la réception d'un signal ultrasonore, est relié au moyen d'un dispositif de fixation à une pièce d'habillage extérieur (6) du véhicule automobile, la membrane (8) étant pressée avec une force de précharge contre une face intérieure (7) de la pièce d'habillage extérieur (6) au moyen du dispositif de fixation dans une position de montage appropriée du dispositif (2) de détection par ultrasons sur la pièce d'habillage extérieur (6), le capteur à ultrasons (3) étant agencé de manière cachée derrière la pièce d'habillage extérieure (6) du véhicule automobile dans la position de montage appropriée,
un dispositif de maintien (5) du dispositif de fixation étant agencé sur la face intérieure (7) de la pièce d'habillage extérieure (6), le capteur à ultrasons (3) étant agencé dans un dispositif de recouvrement (4) du dispositif de fixation de telle sorte qu'une face arrière (23) du capteur à ultrasons (3) opposée à la membrane (8) soit maintenue dans un logement (24) du dispositif de recouvrement (4), le dispositif de recouvrement (4) et le dispositif de maintien (5) étant reliés par complémentarité de formes de telle sorte que la membrane (8) soit agencée dans une ouverture (22) du dispositif de maintien (5),
**caractérisé en ce que** le dispositif de recouvrement (4) présente au moins un élément élastique (16) pour fournir la force de précharge, et
le capteur à ultrasons (3) présente un boîtier (11), le boîtier (11) présentant au moins une saillie (14) sur laquelle s'appuie ledit au moins un élément élastique (16) .
